# EUROPÄISCHE PATENTSCHRIFT

(11) **EP 2 985 096 B1**
(45) Veröffentlichungstag und Bekanntmachung des Hinweises auf die Patenterteilung: **02.11.2016**
(21) Anmeldenummer: 14181052.3
(22) Anmeldetag: 14.08.2014
(51) Int. Cl.: H01M 8/0232, H01M 8/0245, H01M 8/1004, H01M 4/88, C25B 11/03, C25B 11/00, H01M 4/86, B23K 35/00, B23K 35/02, B32B 7/00, B23K 11/00, B22F 3/00, B32B 15/04

(54) **Gasdiffusionselektrode**
Gas diffusion electrode
Électrode de diffusion de gaz

(43) Veröffentlichungstag der Anmeldung: 17.02.2016
(73) Patentinhaber: Melicon GmbH, 41836 Hückelhoven (DE)
(72) Erfinder: Müller, Ulrich, 41836 Hückelhoven (DE)
(74) Vertreter: Stenger Watzke Ring

(56) Entgegenhaltungen:
- WO-A1-01/93353
- DE-B3-102005 057 024
- DE-C1- 10 250 716
- US-A- 3 907 513
- US-A- 5 804 055

## Beschreibung

Die Erfindung betrifft eine Gasdiffusionselektrode gemäß Anspruch 1, auch Gasdiffusionslayer (GDE) genannt, und zwar für eine Membran und eine daran anliegende Gasdiffusionselektrode aufweisende Membran-Elektroden-Anordnung (MEA) einer Brennstoffzelle, insbesondere einer Wasserstoff-Sauerstoff-Brennzelle, oder einer Elektrolysevorrichtung, insbesondere einer Elektrolysevorrichtung für die Wasserelektrolyse. Ferner betrifft die Erfindung ein Verfahren zur Herstellung einer Gasdiffusionselektrode.
Gasdiffusionselektroden sind aus dem Stand der Technik an sich bekannt. Sie finden bei der Durchführung elektro-chemischer Prozesse Verwendung, so zum Beispiel in Brennstoffzellen oder in als Membranelektrolyseur ausgebildeten Elektrolysevorrichtungen.
Aus der DE 100 27 339 A1 ist eine Gasdiffusionselektrode bekannt, die aus einem elektrisch leitenden Katalysatorträger und einem Elektroanschluss besteht, wobei der Katalysatorträger der Aufnahme von Katalysatormaterial dient. Als Katalysatorträger kommt ein Gewebe, Vlies, Schaum oder Filz aus elektrisch leitendem Material, eine Streckmetallplatte oder eine mit einer Vielzahl von Öffnungen versehene Metallplatte zum Einsatz, auf der das Katalysatormaterial aufgebracht ist. Dabei ist der Katalysatorträger zur Ausbildung einer dimensionsstabilen Gasdiffusionselektrode mit einer gasdurchlässigen metallischen Grundplatte, insbesondere aus Nickel oder seinen Legierungen mechanisch und elektrisch leitend mittels Versintern fest verbunden. Von Vorteil dieser Ausgestaltung ist, dass trotz der offenen Struktur des Katalysatorträgers zur Aufnahme des Katalysatormaterials eine vergleichsweise formstabile Gasdiffusionselektrode bereitgestellt ist, was durch die vergleichsweise steife Unterstruktur der Grundplatte erreicht ist, die beim Einpressen des Katalysatormaterials die Funktion eines Widerlagers übernimmt.

Die DE 10 2004 023 161 A1 offenbart eine Elektrolysezelle, die zur Bereitstellung eine Elektrode mit großer spezifischer Oberfläche vorschlägt, die Katoden und/oder Anoden als Mehrlagen-Streckmetall-Elektroden auszubilden, die aus mindestens zwei miteinander und mit einer Randelektrode über interne Widerstandsstrecken kontaktierte Streckmetall-Lagen bestehen. Die Streckmetall-Lagen liegen jeweils auf Grundplatten auf und sind in einem Zellentrog oder in mehreren miteinander verspannten Elektrodenrahmen angeordnet. Zur weiteren Vergrößerung der spezifischen Elektrodenoberfläche sind zwischen den Streckmetall-Lagen vorzugsweise poröse Zwischenlagen angeordnet.

Aus der DE 197 29 429 C1 ist schließlich noch eine Elektrolysevorrichtung bekannt, die eine Anzahl von Membran-Elektrolyse-Zellen aufweist, von denen jede eine beidseitig mit einer Kontaktschicht versehene Membran umfasst. Damit die Elektrolysevorrichtung bei kompakter Bauweise auch für vergleichsweise hohe Wasserstoffproduktionsraten geeignet und somit besonders flexibel einsetzbar ist, ist an jeder Kontaktschicht jeweils eine Kontaktplatte angeordnet, wobei jede Kontaktplatte auf ihrer der ihr zugeordneten Kontaktschicht zugewandten Oberfläche eine Kanalsystem zum Transport von Wasser und/oder Gas aufweist.

Aus der US 5,804,055 ist eine Elektrode für eine elektrochemische Zelle bekannt. Dabei ist die Elektrode eine poröse, mehrschichtige Elektrode, die ein flexibles, streifenförmiges Element aufweist, das um einen zentralen, in der Regel flach ausgebildeten Kern herumgewickelt ist. Jede Schicht der Elektrode kann aus einem sehr dünnen, hoch flexiblen Metallgitter gebildet sein.

Aus der US 3,907,513 ist ein Verbundwerkstoff mit vorgegebener Porösität bekannt. Der Verbundwerkstoff umfasst eine Vielzahl von Sieben, die miteinander in paralleler Weise verbunden sind. Dabei sind in die Maschen jedes Siebes im Wesentlichen kugelförmige Partikel eingesetzt, die einen Durchmesser aufweisen, der die Größe der Öffnungen der Maschen im Wesentlichen reduziert.

Die DE 102 50 716 C1 betrifft ein Verfahren zur Herstellung eines porösen, plattenförmigen Metallverbundes. Der Metallverbund wird aus Metallfasern hergestellt, die in einem Arbeitsschritt gepresst und miteinander verschweißt werden.

Aus der DE 10 2005 057 024 B3 ist ein Gewebelaminat als Auskleidung zur Schallabsorption von Ein- und Auslassschalldämpfern bekannt. Das Laminat weist wenigstens drei übereinander geschichtete und wenigstens teilweise miteinander verschweißte Gewebelagen auf, von denen eine relativ zu den anderen eine grobe Struktur, eine andere eine feine Struktur und die verbleibende Gewebelage eine Struktur zwischen der groben und der feinen Struktur aufweist. Die Gewebelagen sind miteinander verwoben oder weisen vliesartig verschlungene metallische Drähte auf.

Obgleich Brennstoffzellen und Elektrolysevorrichtungen sowie darin zum Einsatz kommende Gasdiffusionselektroden in vielerlei Ausgestaltungsformen bekannt sind, besteht Verbesserungsbedarf. Es ist deshalb die Aufgabe der Erfindung, eine neuartige Gasdiffusionselektrode vorzuschlagen, die aufgrund ihres konstruktiven Aufbaus flexibel und vielseitig einsetzbar ist.

Zur Lösung dieser Aufgabe wird mit der Erfindung vorgeschlagen eine Gasdiffusionselektrode mit einer Mehrzahl von schichtweise angeordneten Streckmetalllagen, wobei benachbarte Streckmetalllagen in Kontaktpunkten ihrer einander zugewandten Flachseiten mittels Widerstands-Impulsschweißen miteinander verbunden sind, wobei sich die Kontaktpunkte in Folge der Gitterausgestaltung der Streckmetalllagen regelmäßig über die gesamten einander zugewandten Flachseiten der Streckmetalllagen erstrecken und wobei zumindest eine der Streckmetalllagen in ihrer Längsausrichtung um 90° verdreht zu einer ihrer benachbarten Streckmetalllagen angeordnet ist.

Die erfindungsgemäße Gasdiffusionselektrode verfügt über eine Mehrzahl von schichtweise angeordneten Streckmetalllagen. Dabei meint "Streckmetall" eine mit Öffnungen in der Oberfläche ausgebildete Metalltafel, wobei die Öffnungen, auch Maschen genannt, durch versetzte Schnitte ohne Materialverlust unter gleichzeitig streckender Verformung der Metalltafel entstehen. Mehrere Lagen Streckmetall bilden die erfindungsgemäße Gasdiffusionselektrode aus, wobei jeweils benachbarte Streckmetalllagen miteinander verschweißt sind. Es ist so ein formstabiler Verbund aus einer Mehrzahl von Streckmetalllagen gegeben, wobei je nach späterem Verwendungszweck der Gasdiffusionselektrode vier, fünf, sechs oder noch mehr Streckmetalllagen vorgesehen sein können.

Die durch Schweißen miteinander verbundenen Streckmetalllagen bilden in vorteilhafter Weise eine glatte, ebene und stabile Auflage für die protonenleitende Membran der Membran-Elektroden-Anordnung. Diese Membran befindet sich im endmontierten Zustand der Membran-Elektroden-Anordnung zwischen zwei Gasdiffusionselektroden, wobei die eine der beiden Gasdiffusionselektroden im Falle beispielsweise der Wasserelektrolyse aus Titan (Sauerstoff-Seite) und die andere Gasdiffusionselektrode aus Edelstahl (Wasserstoff-Seite) gebildet ist.

Benachbarte Streckmetalllagen sind erfindungsgemäß in Kontaktpunkten ihrer einander zugewandten Flachseiten mittels Widerstands-Impulsschweißen flächenhaft miteinander verbunden. "Flächenhaft" im Sinne der Erfindung meint dabei aufgrund der Gitterausgestaltung der Streckmetalllagen nicht vollflächig. Es findet aber im Sinne einer flächenhaften Ausgestaltung eine Verbindung in den Kontaktpunkten zweier benachbarten Streckmetalllager statt, die sich infolge der Gitterausgestaltung der Streckmetalllagen regelmäßig über die gesamten einander zugewandten Flachseiten der Streckmetalllagen erstrecken. Es wird insofern nicht nur eine punktförmige Verbindung erreicht, sondern vielmehr eine solche, die insoweit flächenhaft ist, als dass sich in regelmäßiger Ausgestaltung zahllose Kontaktpunkte über die gesamte Oberfläche der einander in Kontakt stehenden Flachseiten benachbarter Streckmetalllagen ausbilden. Es wird so in vorteilhafter Weise ein sehr formstabiler Verbund an Streckmetalllagen bereitgestellt.

Die einzelnen Streckmetalllagen verfügen herstellungsbedingt über eine plastische Höhe, die größer ist, als die Blechdicke der als Ausgangsmaterial gewählten Metalltafeln. Diese plastische Höhe verleiht dem Streckmetall gewisse Federeigenschaften, die in vorteilhafter Weise bei einem Verbinden der Streckmetalllagen mittels Widerstands-Impulsschweißen erhalten bleibt. Die endfertig miteinander zu einem Verbund miteinander verschweißten Streckmetalllagen besitzen somit definierte Federeigenschaften, die sich anhand der Federkennlinien der einzelnen Streckmetalllagen berechnen und reproduzierbar ausbilden lassen. Es ist deshalb in vorteilhafterweise möglich, aufgrund der konstruktiven Ausgestaltung nach der Erfindung gezielt Einfluss auf die spätere Kontaktkraft zwischen Gasdiffusionselektrode einerseits und daran anliegender Membran andererseits mit dem Ziel Einfluss zu nehmen, dass ein dauerhaft vollflächiges und sicheres Anliegen der Membran an der oder den zugeordneten Gasdiffusionselektroden sichergestellt ist. Gegenüber dem aus dem Stand der Technik bekannten Sintern hat das Verbinden mittels Widerstands-Impulsschweißen zudem den Vorteil, dass sich Streckmetalllagenverbunde mit definierter Dicke, das heißt einem geringen Toleranzmaß herstellen lassen, beispielsweise einem Toleranzmaß von +/- 0,5 mm, vorzugsweise von +/- 0,3 mm, noch mehr bevorzugt von +/- 0,05 mm. Ein solch geringes Toleranzmaß erweist sich insbesondere bei der Verschaltung mehrerer Membran-Elektroden-Anordnungen zu einer Gesamtzelle als vorteilhaft, weil die sich negativ auf eine Membrankontaktierung auswirkenden Setzerscheinungen minimiert sind.

Sowohl in Brennstoffzellen als auch in Elektrolysevorrichtungen werden eine Mehrzahl von einzelnen Membran-Elektroden-Anordnungen innerhalb eines sogenannten Stacks in Reihe geschaltet und bilden so eine Membran-Elektrolysezelle aus. Aufgrund der Federeigenschaften der einzelnen Gasdiffusionselektroden lassen sich gewisse Setzungserscheinungen der zu einem Stack miteinander verspannten Membran-Elektroden-Anordnungen nicht vermeiden. Überschreiten diese Setzerscheinungen allerdings eine gewisse Grenze, so ist ein für den bestimmungsgemäßen Betrieb vollflächiges Anliegen der einzelnen Membranen an ihren zugehörigen Gasdiffusionselektroden nicht mehr gewährleistet. Die nach der Erfindung vorgesehene Verschweißung der einzelnen Streckmetalllagen einer Gasdiffusionselektrode schafft hier Abhilfe, denn die Verschweißung mittels Widerstands-Impulsschweißen erbringt den schon vorerläuterten Vorteil des geringen Toleranzmaßes, womit ungewollte Setzerscheinungen vermieden sind, was in vorteilhafter Weise eine dauerhaft sichere Verwendung mit erfindungsgemäßen Gasdiffusionselektroden ausgerüsteten Membran-Elektroden-Anordnung gestattet, auch im Stack-Verbund.

Die Verbindung der einzelnen Streckmetalllagen mittels Widerstands-Impulsschweißen hat insbesondere gegenüber dem Verbinden mittels Sintern den weiteren Vorteil, dass unabhängig von der Größe von Sinteröfen nahezu beliebige geometrische Abmessungen auch kontinuierlich hergestellt werden können. So erlaubt die erfindungsgemäße Ausgestaltung eine Herstellung, wonach die einzelnen Streckmetalllagen schichtweise übereinander angeordnet und alsdann miteinander verschweißt werden. Der so ausgebildete Verbund kann alsdann beispielsweise mittels Laserschneiden zur Bildung einzelner Gasdiffusionselektroden abgelängt, zugeschnitten und/oder portioniert werden. Dabei erweist sich das Widerstands-Impulsschweißen gegenüber Sintern auch insofern als vorteilhaft, als dass es energetisch weniger aufwendig und damit kostengünstiger in der Anwendung ist, insbesondere bei großen Stückzahlen. Ein weiterer Vorteil besteht darin, dass das beim Sintern eintretende Spannungsarmglühen beim Widerstands-Impulsschweißen nicht eintritt. Hierdurch wird der linear-elastische Bereich, auch Hookesche Gerade genannt, nicht beeinträchtigt und bleibt in Gänze erhalten. Der Streckmetallverbund verfügt damit im Gegensatz zu einem Sinterverbund über reproduzierbare Federeigenschaften.

Zumindest eine der Streckmetalllagen ist in ihrer Längsausrichtung um 90° verdreht zu einer ihrer benachbarten Streckmetalllagen angeordnet. Es ist mithin vorgesehen, dass zumindest zwei benachbarte Streckmetalllagen des späteren Streckmetalllagen-Verbunds nicht deckungsgleich sondern verdreht, vorzugsweise um 90° verdreht zueinander ausgerichtet sind. Bevorzugterweise sind sogar alle benachbarten Streckmetalllagen um jeweils 90° versetzt zueinander ausgerichtet, das heißt die einer Streckmetalllage in Dickenrichtung nachfolgende Streckmetalllage ist um 90° verdreht zur vorherigen Streckmetalllage ausgerichtet.

Diese nach der Erfindung vorgesehene verdrehte Anordnung der Streckmetalllagen erbringt insbesondere den Vorteil, dass im bestimmungsgemäßen Anwendungsfall die Ausbildung einer laminaren Strömung des die Membran-Elektroden-Anordnung passierenden Fluids vermieden ist. Es wird aufgrund der verdrehten Anordnung der Streckmetalllagen vielmehr eine turbulente Durchströmung erreicht, was zum einen zu einer gleichmäßigen Fluidverteilung innerhalb der Membran-Elektroden-Anordnung als auch zum anderen zu einer vollständigen Penetration der Membran-Elektroden-Anordnung führt. Es wird so ein erhöhter Wirkungsgrad der Brennstoffzelle beziehungsweise der Elektrolysevorrichtung erreicht.

Die verdrehte Anordnung der Streckmetalllagen erbringt in Kombination mit dem Merkmal, dass benachbarte Streckmetalllagen miteinander verschweißt sind, zudem den synergetischen Effekt, dass ein formstabiler Gesamtverbund bei gleichzeitig geringem Toleranzmaß in Dickenrichtung vorliegt. So bewirkt die verdreht Anordnung benachbarter Streckmetalflagen, dass die sich zwischen zwei einander zugewandten Flachseiten benachbarter Streckmetalllagen ausbildenden Kontaktpunkte nicht deckungsgleich zu denjenigen Kontaktpunkten sind, die sich zwischen den einander zugewandten Flachseiten der Nachbarlage ausbilden. Es entsteht so in Verbunddickenrichtung eine versetzte Ausbildung der einzelnen Kontaktpunkte, womit ein insgesamt sehr formstabiler Verbund mit über die Gesamtverbundfläche definierten Federeigenschaften entsteht. Die versetzte Ausrichtung der einzelnen Streckmetalllagen hat ferner den Vorteil, dass etwaige fertigungsbedingte Dickentoleranzen der einzelnen Streckmetalllagen ausgeglichen werden. Es ist mithin eine gleichmäßige Dicke des Gesamtverbundes über seine gesamte Fläche sichergestellt.

Es ist gemäß einem weiteren Merkmal der Erfindung vorgesehen, dass einige der Streckmetalllagen jeweils Maschen mit unterschiedlicher Maschenweite aufweisen. Je Streckmetalllage ist eine bestimmte Maschenweite vorgesehen. Diese Maschenweite kann von Streckmetalllage zu Streckmetalllage variieren. Diese Ausgestaltung ist insbesondere in zweierlei Hinsicht von Vorteil. Die wünschenswerterweise im bestimmungsgemäßen Verwendungsfall zu erreichende turbulente Fluiddurchströmung wird so unterstützt. Ferner kommt es zu einer verungleichmäßigten Verteilung der sich zwischen den einzelnen Streckmetalllagen ausbildenden Kontaktpunkten, was die Formstabilität des späteren Verbundes zusätzlich fördert.

Es ist gemäß einem weiteren Merkmal der Erfindung vorgesehen, dass die Maschen der an der Membran der Membran-Elektroden-Anordnung anliegenden Streckmetalllage die kleinste Maschenweite aufweist. Erfindungsgemäß ist mithin vorgesehen, dass die im bestimmungsgemäßen Anwendungsfall mit der Membran der Membran-Elektroden-Anordnung in Kontakt kommende Streckmetalllage ein möglichst feines Streckmetall aufweist. Es wird so der aufliegenden Membran in vorteilhafter Weise eine möglichst glatte, gleichwohl aber poröse Oberfläche bereitgestellt.

Gemäß einem weiteren Merkmal wird in diesem Zusammenhang vorgeschlagen, dass die Maschengröße der Maschen der Streckmetalllagen in Schichtdickenrichtung auf die an der Membran der Membran-Elektroden-Anordnung anliegende Streckmetalllage abnimmt. Demgemäß kommen in den Membran entfernten Lagen gröbere Streckmetalle zum Einsatz, wobei sich die Maschenweite in Richtung auf die Membran verringert, das heißt den gröberen Streckmetallen feinere Streckmetalle in Richtung auf die Membran nachfolgen. Die Aufgabe der gröberen Streckmetalle ist es dabei, einerseits eine stabile und ebene Fläche auszubilden, andererseits aber auch eine gewisse Federwirkung aufzubauen. Diese Federwirkung entsteht durch ausgesuchte Streckmetallkombinationen und kann in einem weiten Bereich variiert werden. Es kann so gezielt Einfluss auf den Federkennwert des späteren Streckmetalllagenverbunds, das heißt der Gasdiffusionselektrode Einfluss genommen werden. Dabei ist die vom späteren Streckmetalllagenverbund ausgehende Federwirkung maßgeblich dafür, das im späteren Verwendungsfall sichere Anliegen der Membranen an den zugehörigen Gasdiffusionselektroden sicherzustellen. Dabei erlaubt es die erfindungsgemäße Ausgestaltung aufgrund ihrer Konstruktion, diese Federwirkung sehr genau einzustellen, weshalb sich die erfindungsgemäßen Gasdiffusionselektroden insbesondere auch für die Hochdruckanwendung eignen, so zum Beispiel bei Drücken von über 30 bar, 40 bar, 50 bar und mehr.

Es ist gemäß einem weiteren Merkmal der Erfindung eine weitere Streckmetalllage vorgesehen, die mit der der an der Membran der Membran-Elektroden-Anordnung anliegenden Streckmetalllage gegenüberliegenden Streckmetalllage verbunden ist. Es kommt demgemäß eine weitere Streckmetalllage zum Einsatz, die im endmontierten Zustand der Streckmetalllage gegenüberliegend ausgebildet ist, die im bestimmungsgemäßen Verwendungsfall an der Membran der Membran-Elektroden-Anordnung anliegt. Diese weitere Streckmetalllage kann aus einem besonders groben Streckmetall gebildet sein und dient vorzugsweise der Bereitstellung einer genau definierten Federkraft. Es ist dabei in diesem Zusammenhang ferner vorgesehen, dass die weitere Streckmetalllage mit ihrer benachbarten Streckmetalllage punktverschweißt ist, das heißt im Unterschied zu den anderen Streckmetalllagen nicht flächenhaft mit ihrer benachbarten Streckmetalllage verbunden ist. Durch diese punktverschweißte Ausgestaltung ist sichergestellt, dass die von der weiteren Streckmetalllage bereitgestellten Federeigenschaften auch im späteren Streckmetalllagenverbund zur Verfügung stehen. Ein flächenhaftes Verschweißen würde indes zu einer Minimierung dieser von der weiteren Streckmetalllage bereitgestellten Federeigenschaften führen. Die Zielsetzung mit der weiteren Streckmetalllage besteht also nicht darin, den Streckmetalllagenverbund ergänzend zu stabilisieren, sondern vielmehr darin, eine Art Verspannungsmittel bereitzustellen, das insbesondere im Falle der Hochdruckanwendung dafür sorgt, dass die Gasdiffusionselektroden der einzelnen zu einem Stack miteinander kombinierten Membran-Elektroden-Anordnungen dauerhaft vollflächig an ihren zugehörigen Membranen anliegen, so dass eine zuverlässige Verwendung bei gleichzeitig hohem Wirkungsgrad sichergestellt ist.

Zur Lösung der vorstehenden Aufgabe wird mit der Erfindung zudem vorgeschlagen ein Verfahren zur Herstellung einer Gasdiffusionselektrode für eine Membran-Elektroden-Anordnung einer Brennstoffzelle, insbesondere einer Wasserstoff-Sauerstoff-Brennstoffzelle, oder eine Elektrolysevorrichtung, insbesondere einer Elektrolysevorrichtung für die Wasserelektrolyse, bei dem mehrere Streckmetalllagen schichtweise angeordnet werden, wobei eine der Streckmetalllagen in ihrer Längsausrichtung um 90° verdreht zu einer ihrer benachbarten Streckmetalllagen positioniert wird, bei dem die Streckmetalllagen in einem Arbeitsschritt gepresst und miteinander verschweißt werden, wobei das Verschweißen mittels Widerstands-Impulsschweißen unter Verwendung flächenhafter Elektroden vorgenommen wird, wobei benachbarten Streckmetalllagen in Kontaktpunkten ihrer einander zugewandten Flachseiten miteinander verbunden werden, wobei sich die Kontaktpunkte infolge der Gitterausgestaltung der Streckmetalllagen regelmäßig über die gesamten einander zugewandten Flachseiten der Streckmetalllagen erstrecken.

Nach der erfindungsgemäßen Verfahrensdurchführung werden in einem ersten Verfahrensschritt zunächst die einzelnen Streckmetalllagen schichtweise übereinander gebracht. Hierbei wird zumindest eine der Streckmetalllagen in ihrer Längsausrichtung um 90° verdreht zu einer ihrer benachbarten Streckmetalllagen positioniert. Bevorzugterweise sind indes die Streckmetalllagen in Dickenrichtung jeweils um 90° versetzt zueinander ausgebildet, das heißt einer längs ausgerichtete Streckmetalllage folgt ein quer ausgerichtete Streckmetalllage nach und einer quer ausgerichteten Streckmetalllage folgt eine längs ausgerichtete Streckmetalllage nach. Die so ausgerichtete Positionierung der Streckmetalllagen erbringt die schon vorerläuterten Vorteile.

Nach einer schichtweisen Anordnung der Streckmetalllagen werden diese miteinander verschweißt, wobei die Streckmetalllagen in einem Arbeitsschritt gepresst und miteinander durch Schweißen verbunden werden. Das gleichzeitige Pressen und Schweißen erbringt den Vorteil, dass eine definierte Dickengeometrie erreicht werden kann, und dies bei einem gleichzeitig geringen Toleranzmaß. Dabei erfolgt das Verschweißen mittels Widerstands-Impulsschweißen unter Verwendung flächenhafter Elektroden. Der Einsatz flächenhafter Elektroden ist insoweit von Vorteil, als dass über die gesamte Oberfläche eine gleichwirkende Presskraft aufgebracht werden kann, womit einerseits die Ausbildung sowohl nach Anzahl als auch nach Größe entsprechender Kontaktpunkte zwischen den einander zugewandten Flachseiten benachbarter Streckmetalllagen als auch zum anderen eine in Breiten- und Längenrichtung gleiche Dickenausgestaltung sichergestellt ist.

Gemäß einem besonderen Vorschlag der Erfindung ist vorgesehen, dass die Streckenteillagen zwischen den flächenhaft ausgebildeten Elektroden mit einer für den Schweißvorgang hinreichenden Presskraft unter gleichzeitiger Vermeidung einer plastischen Verformung der Streckmetalllagen gepresst werden. Die mittels der flächenhaften Elektroden aufzubringende Presskraft hat einerseits so hoch zu sein, dass sich die Kontaktpunkte zwischen den einander zugewandten Flachseiten benachbarter Streckmetalllagen für eine ordnungsgemäße Verschweißung ausbilden. Insbesondere im Falle einer zu geringen Presskraft bilden sich diese Kontaktpunkte nicht oder nur in unzureichendem Maße aus, so dass keine ordnungsgemäße Verschweißung der einzelnen Streckmetalllagen erreicht werden kann. Ist die Presskraft zu gering, so wird ferner kein vollflächiges Anliegen der Elektroden an den äußeren Streckmetalllagen erreicht, was zu Lichtbögenausbildungen führen kann, die es in jedem Fall zu vermeiden gilt, da es im Fall der Entstehung eines Lichtbogen zur Materialzerstörung an dieser Stelle kommt. Die aufgebrachte Presskraft darf indes aber auch nicht zu groß sein, weil es ansonsten zu einer plastischen Verformung der Streckmetalllagen kommt, womit die im bestimmungsgemäßen Verwendungsfall notwendigerweise aufzubringende Federkraft der Streckmetalllagen nicht mehr gewährleistet ist. Dabei tritt eine solche plastische Verformung aufgrund des herstellungsbedingt bei Streckmetallen einzukalkulierenden Höhenunterschieds zwischen plastischer Höhe und Blechhöhe des Ausgangsmaterials schon bei verhältnismäßig kleinen Presskraftüberhöhungen auf. Die Presskraft ist mithin so zu wählen, dass ein vollflächiges Anliegen der Elektroden an den äußeren Streckmetalllagen sichergestellt ist, dass sich hinreichend viele Kontaktpunkte zwischen benachbarten Streckmetalllagen ausbilden und dass plastische Verformungen der Streckmetalllagen vermieden sind. Dabei kann die Presskraft in Abhängigkeit der eingesetzten Schweißenergie variiert werden.

Es werden mittels der Elektroden bevorzugterweise eine Presskraft erzeugt von 1,0 N/mm² bis 3,5 N/mm², vorzugsweise von 1,3 N/mm² bis 3,0 N/mm², mehr bevorzugt von 1,5 N/mm² bis 2,8 N/mm², am meisten bevorzugt von 1,7 N/mm² bis 2,5 N/mm².

Ferner wird mit der Erfindung vorgeschlagen, dass mittels der Elektroden eine Schweißenergie erzeugt wird von 1,0 J/mm² bis 3,0 J/mm², vorzugsweise von 1,2 J/mm² bis 2,6 J/mm², noch mehr bevorzugt von 1,4 J/mm² bis 2,4 J/mm², am meisten bevorzugt von 1,6 J/mm² bis 2,2 J/mm².

Gemäß einem weiteren Merkmal der Erfindung ist vorgesehen, dass der aus mehreren Streckmetalllagen bestehende Verbund mit einer weiteren Streckmetalllage verbunden wird. Diese weitere Streckmetalllage besteht bevorzugterweise aus einem gröberen Streckmetall und wird auf der membranentfernten Seite des Streckmetallverbunds angebracht. Dabei dient diese weitere Streckmetalllage vornehmlich der Bereitstellung einer entsprechenden Federkraft, was die schon vorstehend beschriebenen Vorteile erbringt.

In diesem Zusammenhang ist verfahrensseitig ferner vorgesehen, dass die weitere Streckmetalllage mit dem Streckmetallverbund mittels Widerstandspunktschweißen verbunden wird. Es wird mithin nicht eine flächenhafte Verbindung ausgebildet, sondern nur eine punktweise Verbindung, so dass die von der weiteren Streckmetalllage bereitgestellte Federkraft im Verwendungsfall bestimmungsgemäß zur Verfügung steht.

Weitere Merkmale und Vorteile der Erfindung ergeben sich aus der nachfolgenden Beschreibung anhand der Figuren. Dabei zeigen die Figuren in rein schematischer Darstellung gemäß
- Fig 1: in einer Explosionsdarstellung eine Membran-Elektroden-Anordnung;
- Fig. 2: in einer Explosionsdarstellung eine Gasdiffusionselektrode;
- Fig. 3: in einer Detailansicht ausschnittsweise eine Streckmetalllage;
- Fig. 4: die erfindungsgemäße Verfahrensdurchführung gemäß einem ersten Schritt;
- Fig. 5: die erfindungsgemäße Verfahrensdurchführung gemäß einem zweiten Schritt und
- Fig. 6: die erfindungsgemäße Verfahrensdurchführung gemäß einem dritten Schritt.

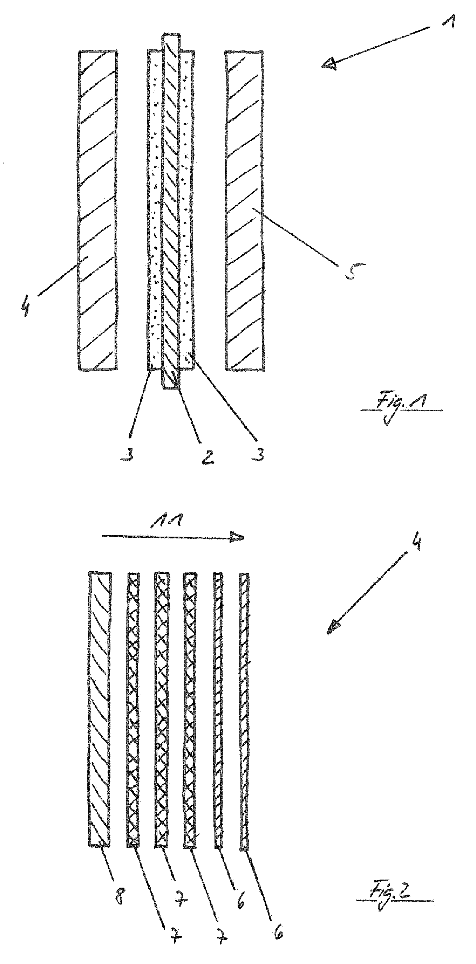

Fig. 1 lässt in rein schematischer Darstellung eine Membran-Elektroden-Anordnung 1 (auch membrane - electrode - assembly, kurz: MEA genannt) erkennen. Im dargestellten Ausführungsbeispiel verfügt die Membran-Elektroden-Anordnung 1 über eine Membran 2, die beidseitig mit einer Katalysatorschicht 3 ausgerüstet ist. Zu diesen Katalysatorschichten 3 benachbart sind eine erste Gasdiffusionselektrode 4 und eine zweite Gasdiffusionselektrode 5 vorgesehen. Dabei kann die Gasdiffusionselektrode 4 beispielsweise die Anodenseite und die Gasdiffusionselektrode 5 die Katodenseite bilden.

Nach der Erfindung sind die Gasdiffusionselektroden 4 beziehungsweise 5 aus einzelnen Schichten von miteinander verschweißten Streckmetalllagen 6, 7, 8 gebildet, wie dies beispielshaft anhand der Gasdiffusionselektrode 4 in Fig. 2 dargestellt ist.

Wie Fig. 2 erkennen lässt, verfügt die Gasdiffusionselektrode 4 im gezeigten Ausführungsbeispiel über insgesamt sechs Streckmetalllagen, wobei Streckmetalllagen mit unterschiedlich großen Maschen vorgesehen sind. Es sind zwei Streckmetalllagen 6 mit verhältnismäßig kleinen Maschenweiten, drei Streckmetalllagen 7 mit größeren Maschenweiten sowie eine Streckmetalllage 8 mit einer vergleichsweise groben Maschenweite vorgesehen. Dabei nimmt die Maschenweite von grob zu fein in Richtung des Pfeils 11, das heißt mit Bezug auf die Darstellung nach Fig. 1 in Richtung auf die an der Gasdiffusionselektrode im endmontierten Zustand anliegende Membran 2 ab.

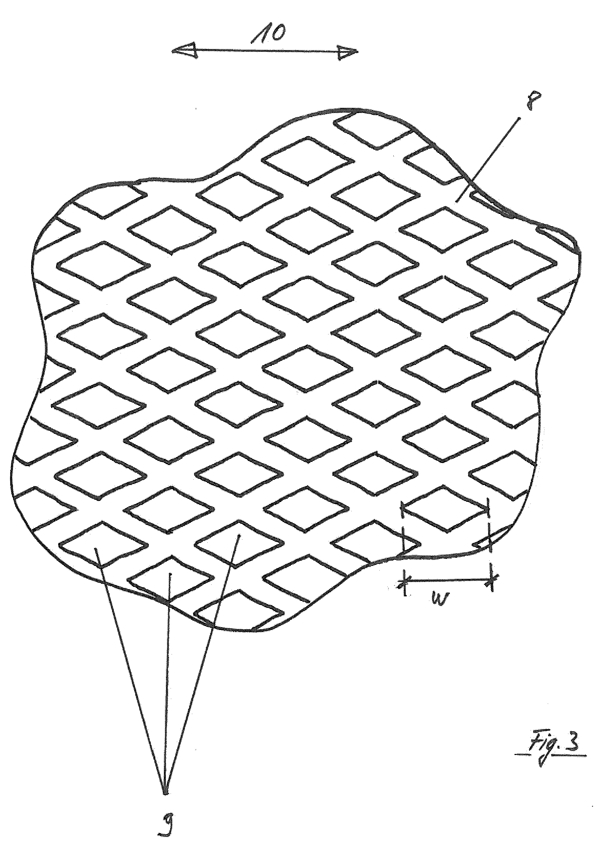

Fig. 3 lässt ausschnittsweise die Streckmetalllage 8 in einer Detailansicht erkennen. Wie sich aus der Darstellung ergibt, verfügt die Streckmetalllage 8 über eine Mehrzahl von rautenähnlich ausgebildeten Maschen 9, die jeweils die Maschenweite W aufweisen. Dabei ergibt sich die Längsausrichtung 10 der Streckmetalllage 8 in Richtung der die Maschengröße bestimmenden Maschenweite W.

Erfindungsgemäß ist vorgesehen, dass die einzelnen Streckmetalllagen der Gasdiffusionselektrode 4 beziehungsweise 5 miteinander verschweißt sind. Dabei ist zumindest eine der Streckmetalllagen 6, 7 und/oder 8 in ihrer Längsausrichtung 10 zu einer ihrer benachbarten Streckmetalllagen 6, 7 oder 8 um 90° verdreht ausgerichtet, das heißt die Streckmetalllagen sind so zueinander verdreht ausgerichtet, dass die Maschenweiten der Maschen der zugehörigen Streckmetalllagen quer, vorzugsweise um 90° verdreht zueinander ausgerichtet sind.

Die Streckmetalllagen 6 und 7 sind mittels Widerstands-Impulsschweißen miteinander verbunden, und zwar in Kontaktpunkten ihrer einander zugewandten Flachseiten 15 beziehungsweise 16. Damit entsteht ein insgesamt als flächenhaft zu bezeichnende Kontaktverbindung zwischen benachbarten Streckmetalllagen.

Die weitere Streckmetalllage 8 ist mit dem aus den Streckmetalllagen 6 und 7 gebildeten Verbund nicht flächenhaft, sondern nur punktweise verbunden, was durch Punktschweißen erreicht ist.

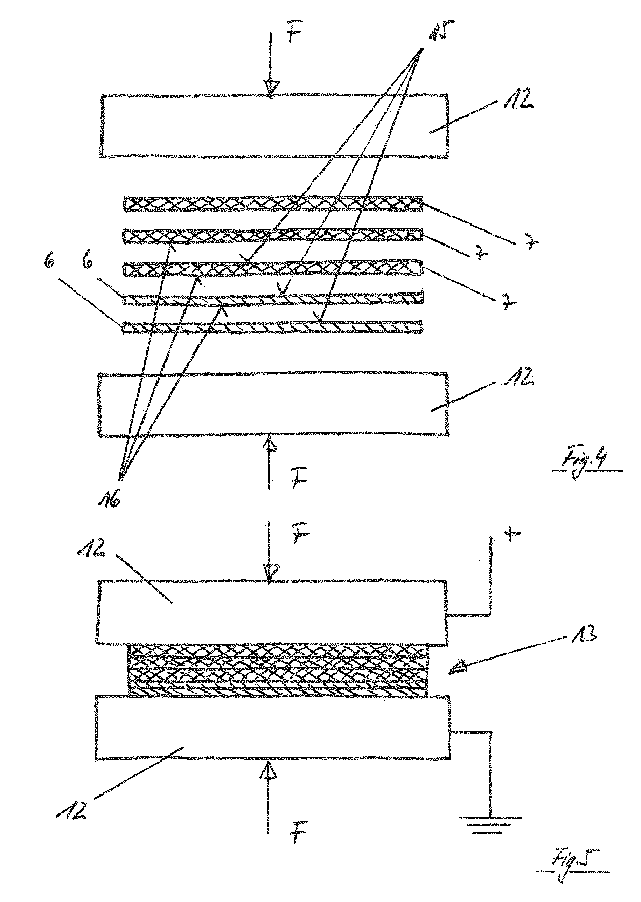

Die Figuren 4, 5 und 6 lassen die erfindungsgemäße Verfahrensdurchführung schematisch erkennen.

Für ein Verschweißen der Streckmetaltlagen 6 und 7 im Widerstands-Impulsschweißverfahren kommen flächenhaft ausgebildete Elektroden 12 zum Einsatz. Dabei werden die miteinander zu verschweißenden Streckmetalllagen in den Öffnungsspalt zwischen den beiden Elektroden 12 verbracht. Dann verfahren die beiden Elektroden 12 zueinander, infolgedessen es zu einem Pressen der zwischen den Elektroden 12 angeordneten Streckmetalllagen 6 und 7 kommt. Die Bewegung der Elektroden 12 wird gestoppt, wenn die Streckmetalllagen durch eine bestimmte, beispielsweise durch eine Steuerung vorgegebene Kraft F zusammengepresst werden. Dabei richtet sich die Anpresskraft F insbesondere nach der geometrischen Ausgestaltung und/oder dem Material der miteinander zu verbindenden Streckmetalllagen 6 und 7 und kann bedarfsgerecht eingestellt werden.

Auf die zwischen den Elektroden 12 gegeneinander gepressten Streckmetalllagen 6 und 7 wird über die Elektroden 12 ein Schweißimpuls I aufgegeben, und zwar für eine bestimmt Impulsdauer mit einer bestimmten Schweißenergie. Die Impulsdauer liegt vorzugsweise im Bereich weniger Millisekunden, beispielsweise zwischen 5 und 100 Millisekunden. Die Schweißenergie kann beispielsweise zwischen 1,4 J/mm² und 2,4 J/mm² liegen.

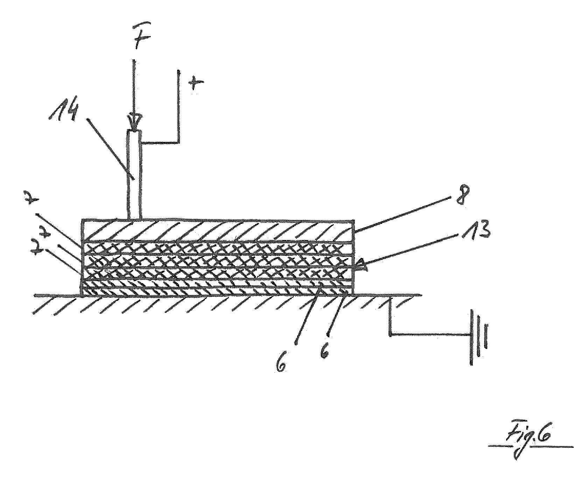

Die miteinander verschweißten Streckmetalllagen 6 und 7 bilden den gemeinsamen Verbund 13 aus. Dieser wird alsdann mit der weiteren Streckmetalllage 8 belegt und punktverschweißt, zu welchem Zweck eine Punktschweißelektrode 14 zum Einsatz kommt, wie dies die Darstellung nach Fig. 6 erkennen lässt. Damit ist die Verbindung zwischen der weiteren Streckmetalllage 8 und dem Verbund 13 nicht flächenhaft, sondern einzelne Schweißpunkte ausgebildet.

### Bezugszeichenliste

- 1: Membran-Elektroden-Anordnung
- 2: Membran
- 3: Katalysatorschicht
- 4: Gasdiffusionselektrode
- 5: Gasdiffusionselektrode
- 6: Streckmetalllage
- 7: Streckmetalllage
- 8: Streckmetalllage
- 9: Masche
- 10: Längsausrichtung
- 11: Pfeil
- 12: Elektrode
- 13: Verbund
- 14: Punktschweißelektrode
- 15: Flachseite
- 16: Flachseite
- W: Maschenweite
- F: Kraft

## Patentansprüche

1. Gasdiffusionselektrode für eine Membran und eine daran anliegende Gasdiffusionselektrode aufweisende Membran-Elektroden-Anordnung einer Brennstoffzelle, insbesondere einer Wasserstoff-Sauerstoff-Brennstoffzelle, oder einer Elektrolysevorrichtung, insbesondere einer Elektrolysevorrichtung für die Wasserelektrolyse, mit einer Mehrzahl von schichtweise angeordneten Streckmetalllagen (6, 7), wobei benachbarte Streckmetalllagen (6, 7) in Kontaktpunkten ihrer einander zugewandten Flachseiten (15, 16) mittels Widerstands-Impulsschweißen miteinander verbunden sind, wobei sich die Kontaktpunkte infolge der Gitterausgestaltung der Streckmetalllagen (6, 7) regelmäßig über die gesamten einander zugewandten Flachseiten (15, 16) der Streckmetalllagen (6, 7) erstrecken und wobei zumindest eine der Streckmetalllagen (6, 7) in ihrer Längsausrichtung (10) um 90° verdreht zu einer ihrer benachbarten Streckmetalllagen (6, 7) angeordnet ist.

2. Gasdiffusionselektrode nach Anspruch 1, **dadurch gekennzeichnet, dass** einige der Streckmetalllagen (6, 7) jeweils Maschen (9) mit unterschiedlicher Maschenweite (W) aufweisen, wobei je Streckmetalllage (6, 7) eine bestimmte Maschenweite vorgesehen ist.

3. Gasdiffusionselektrode nach Anspruch 2, **dadurch gekennzeichnet, dass** die Maschen (9) der an der Membran (2) der Membran-Elektroden-Anordnung (1) anliegenden Streckmetalllage (6) die kleinste Maschenweite (W) aufweisen.

4. Gasdiffusionselektrode nach Anspruch 2 oder 3, **dadurch gekennzeichnet, dass** die Maschenweite (W) der Maschen (9) der Streckmetalllagen (6, 7) in Schichtdickenrichtung (11) auf die an der Membran (2) der Membran-Elektroden-Anordnung (1) anliegende Streckmetalllage (6) abnimmt.

5. Gasdiffusionselektrode nach einem der vorhergehenden Ansprüche, **dadurch gekennzeichnet, dass** eine weitere Streckmetalllage (8) vorgesehen ist, die mit der der an der Membran (2) der Membran-Elektroden-Anordnung (1) anliegenden Streckmetalllage (6) gegenüberliegenden Streckmetalllage (7) verbunden ist.

6. Gasdiffusionselektrode nach Anspruch 5, **dadurch gekennzeichnet, dass** die weitere Streckmetalllage (8) mit ihrer benachbarten Streckmetalllage (7) punktverschweißt ist.

7. Gasdiffusionselektrode nach einem der vorhergehenden Ansprüche, **dadurch gekennzeichnet, dass** die Gasdiffusionselektrode (4) in Dickenrichtung über ein linear-elastisches Verhalten verfügt.

8. Verfahren zur Herstellung einer Gasdiffusionselektrode (4) für eine Membran-Elektroden-Anordnung (1) einer Brennstoffzelle, insbesondere eine Wasserstoff-Sauerstoff-Brennstoffzelle, oder einer Elektrolysevorrichtung, insbesondere einer Elektrolysevorrichtung für die Wasserelektrolyse, bei dem mehrere Streckmetalllagen (6, 7) schichtweise angeordnet werden, wobei eine der Streckmetalllagen (6, 7) in ihrer Längsausrichtung (10) um 90° verdreht zu einer ihrer benachbarten Streckmetalllagen (6, 7) positioniert wird, bei dem die Streckmetalllagen (6, 7) in einem Arbeitsschritt gepresst und miteinander verschweißt werden, wobei das Verschweißen mittels Widerstands-Impulsschweißen unter Verwendung flächenhafter Elektroden (12) vorgenommen wird, wobei benachbarte Streckmetalllagen (6, 7) in Kontaktpunkten ihrer einander zugewandten Flachseiten miteinander verbunden werden, wobei sich die Kontaktpunkte infolge der Gitterausgestaltung der Streckenmetalllagen (6, 7) regelmäßig über die gesamten einander zugewandten Flachseiten (15, 16) der Streckmetalllagen (6, 7) erstrecken.

9. Verfahren nach Anspruch 8 **dadurch gekennzeichnet, dass** die Streckmetalllagen (6, 7) zwischen den flächenhaft ausgebildeten Elektroden (12) mit einer für den Schweißvorgang hinreichenden Presskraft unter gleichzeitiger Vermeidung einer plastischen Verformung der Streckmetalllagen (6, 7) gepresst werden.

10. Verfahren nach Anspruch 9, **dadurch gekennzeichnet, dass** mittels der Elektroden (12) eine Presskraft von 1,0 N/mm² bis 3,5 N/mm², vorzugsweise von 1,3 N/mm² bis 3,0 N/mm², mehr bevorzugt von 1,5 N/mm² bis 2,8 N/mm², am meisten bevorzugt von 1,7 N/mm² bis 2,5 N/mm² erzeugt wird.

11. Verfahren nach einem der vorhergehenden Ansprüche 8 bis 10, **dadurch gekennzeichnet, dass** mittels der Elektroden eine Schweißenergie von 1,0 J/mm² bis 3,0 J/mm², vorzugsweise von 1,2 J/mm² bis 2,6 J/mm², noch mehr bevorzugt von 1,4 J/mm² bis 2,4 J/mm², am meisten bevorzugt von 1,6 J/mm² bis 2,2 J/mm² erzeugt wird.

12. Verfahren nach einem der vorhergehenden Ansprüche 8 bis 11, **dadurch gekennzeichnet, dass** ein aus mehreren Streckmetalllagen (6, 7) bestehender Verbund (13) mit einer weiteren Streckmetalllage (8) verbunden wird.

13. Verfahren nach Anspruch 12, **dadurch gekennzeichnet, dass** die weitere Streckmetalllage (8) mit dem Streckmetallverbund (13) mittels Widerstandspunktschweißen verbunden wird.

## Claims

1. A gas diffusion electrode for a membrane and a membrane-electrode arrangement comprising an adjacent gas diffusion electrode of a fuel cell, in particular a hydrogen-oxygen fuel cell, or of an electrolysis device, in particular an electrolysis device for the water electrolysis, comprising a plurality of layer-wise arranged expanded metal layers (6, 7), wherein adjacent expanded metal layers (6, 7) are connected to each other at contact points of their flat sides (15, 16) facing each other by means of resistance impulse welding, wherein due to the grid design of the expanded metal layers (6, 7) the contact points extend regularly over the entire flat sides (15, 16) facing each other of the expanded metal layers (6, 7) and wherein at least one of the expanded metal layers (6, 7) is arranged in its longitudinal extension (10) such that it is rotated by 90° with respect to one of its adjacent expanded metal layers (6, 7).

2. A gas diffusion electrode according to claim 1, **characterized in that** some of the expanded metal layers (6, 7) respectively comprise meshes (9) with a different mesh size (W), wherein a special mesh size is provided for each expanded metal layer (6, 7).

3. A gas diffusion electrode according to claim 2, **characterized in that** the meshes (9) of the expanded metal layer (6) adjacent to the membrane (2) of the membrane-electrode arrangement (1) comprise the smallest mesh size (W).

4. A gas diffusion electrode according to claim 2 or 3, **characterized in that** the mesh size (W) of the meshes (9) of the expanded metal layers (6, 7) decreases in the layer thickness direction (11) towards the expanded metal layer (6) which is adjacent to the membrane (2) of the membrane-electrode arrangement (1).

5. A gas diffusion electrode according to one of the preceding claims, **characterized in that** another expanded metal layer (8) is provided which is connected to the expanded metal layer (7) which is opposite to the expanded metal layer (6) that is adjacent to the membrane (2) of the membrane-electrode arrangement (1).

6. A gas diffusion electrode according to claim 5, **characterized in that** the other expanded metal layer (8) is spot welded to its adjacent expanded metal layer (7).

7. A gas diffusion electrode according to one of the preceding claims, **characterized in that** the gas diffusion electrode (4) has a linear elastic behavior in the direction of thickness.

8. A method for the manufacture of a gas diffusion electrode (4) for a membrane-electrode arrangement (1) of a fuel cell, in particular a hydrogen-oxygen fuel cell, or of an electrolysis device, in particular an electrolysis device for the water electrolysis, in which several expanded metal layers (6, 7) are arranged in a layer-wise manner, wherein one of the expanded metal layers (6, 7) is positioned in its longitudinal extension (10) such that it is rotated by 90° with respect to one of its adjacent expanded metal layers (6, 7), in which the expanded metal layers (6, 7) are pressed and welded to each other in one working step, wherein the welding is carried out by means of resistance-impulse welding using areal electrodes (12), wherein adjacent expanded metal layers (6, 7) are connected to each other at contact points of their flat sides facing each other, wherein due to the grid design of the expanded metal layers (6, 7) the contact points extend regularly over the entire flat sides (15, 16) facing each other of the expanded metal layers (6, 7).

9. A method according to claim 8, **characterized in that** the expanded metal layers (6, 7) between the areal electrodes (12) are pressed with a pressing force which is sufficient for the welding operation while simultaneously avoiding a plastic deformation of the expanded metal layers (6, 7).

10. A method according to claim 9, **characterized in that** a pressing force comprised between 1.0 N/mm² and 3.5 N/mm², preferably between 1.3 N/mm² and 3.0 N/mm², more preferably between 1.5 N/mm² and 2.8 N/mm², most preferably between 1.7 N/mm² and 2.5 N/mm² is generated by means of the electrodes (12).

11. A method according to one of the preceding claims 8 through 10, **characterized in that** a welding energy comprised between 1.0 J/mm² and 3.0 J/mm², preferably between 1.2 J/mm² and 2.6 J/mm², more preferably between 1.4 J/mm² and 2.4 J/mm², most preferably between 1.6 J/mm² and 2.2 J/mm² is generated by means of the electrodes.

12. A method according to one of the preceding claims 8 through 11, **characterized in that** a compound (13) composed of several expanded metal layers (6, 7) is connected to another expanded metal layer (8).

13. A method according to claim 12, **characterized in that** the other expanded metal layer (8) is connected to the expanded metal compound (13) by means of resistance spot welding.

## Revendications

1. Electrode de diffusion de gaz pour une membrane et un ensemble d'électrode à membrane comprenant une électrode de diffusion de gaz adjacente d'une pile à combustible, notamment d'une pile à combustible hydrogène oxygène, ou d'un dispositif d'électrolyse, notamment d'un dispositif d'électrolyse pour l'électrolyse d'eau, comprenant une pluralité de couches en métal déployé (6, 7) disposées par couches, des couches en métal déployé (6, 7) adjacentes étant reliées l'une à l'autre à des points de contact de leurs faces planes (15, 15) faisant face l'une à l'autre par moyen de soudage par impulsion et par résistance, les points de contact s'étendant, par suite de la configuration de grille des couches en métal déployé (6, 7), régulièrement sur les faces planes entières (15, 16) faisant face l'une à l'autre des couches en métal déployé (6, 7) et au moins une des couches en métal déployé (6, 7) étant disposée dans son extension longitudinal (10) de sorte qu'elle est tournée par 90° par rapport à une de ses couches en métal déployé adjacentes (6, 7).

2. Electrode de diffusion de gaz selon la revendication 1, **caractérisée en ce que** quelques-unes des couches en métal déployé (6, 7) comprennent chacune des mailles (9) ayant une ouverture de maille (W) différente, une ouverture de maille (W) particulière étant prévue pour chaque couche en métal déployé (6, 7).

3. Electrode de diffusion de gaz selon la revendication 2, **caractérisée en ce que** les mailles (9) de la couche en métal déployé (6) adjacente à la membrane (2) de l'ensemble d'électrode à membrane (1) comprennent la plus petite ouverture de maille (W).

4. Electrode de diffusion de gaz selon la revendication 2 ou la revendication 3, **caractérisée en ce que** l'ouverture de maille (W) des mailles (9) des couches en métal déployé (6, 7) diminue dans la direction de l'épaisseur de couche (11) vers la couche en métal déployé (6) qui est adjacente à la membrane (2) de l'ensemble d'électrode à membrane (1).

5. Electrode de diffusion de gaz selon l'une des revendications précédentes, **caractérisée en ce qu'**une autre couche en métal déployé (8) est prévue, qui est reliée à la couche en métal déployé (7), qui est opposée à la couche en métal déployé (6) qui est adjacente à la membrane (2) de l'ensemble d'électrode à membrane (1).

6. Electrode de diffusion de gaz selon la revendication 5, **caractérisée en ce que** l'autre couche en métal déployé (8) est soudée par points à sa couche en métal déployé (7) adjacente.

7. Electrode de diffusion de gaz selon l'une des revendications précédentes, **caractérisée en ce que** l'électrode de diffusion de gaz (4) a un comportement linéaire-élastique dans la direction d'épaisseur.

8. Procédé de fabrication d'une électrode de diffusion de gaz (4) pour un ensemble d'électrode à membrane (1) d'une pile à combustible, notamment d'une pile à combustible hydrogène oxygène, ou d'un dispositif d'électrolyse, notamment d'un dispositif d'électrolyse pour l'électrolyse d'eau, dans lequel plusieurs couches en métal déployé (6, 7) sont disposées par couches, une des couches en métal déployé (6, 7) étant positionnée dans son extension longitudinal (10) de sorte qu'elle est tournée par 90° par rapport à une de ses couches en métal déployé adjacentes (6, 7), dans lequel les couches en métal déployé (6, 7) sont pressées et soudées l'une à l'autre dans une étape de travail, le soudage se faisant par moyen de soudage par résistance et par impulsion en utilisant des électrodes planes (12), des couches en métal déployé (6, 7) adjacentes étant reliées l'une à l'autre à des points de contact de leurs faces planes faisant face l'une à l'autre, les points de contact s'étendant, par suite de la configuration de grille des couches en métal déployé (6, 7), régulièrement sur les faces planes entières (15, 16) faisant face l'une à l'autre des couches en métal déployé (6, 7).

9. Procédé selon la revendication 8, **caractérisé en ce que** les couches en métal déployé (6, 7) entre les électrodes planes (12) sont pressées avec une force de compression, qui est suffisante pour l'opération de soudage en évitant simultanément une déformation plastique des couches en métal déployé (6, 7).

10. Procédé selon la revendication 9, **caractérisé en ce qu'**une force de compression comprise entre 1,0 N/mm² et 3,5 N/mm², de préférence entre 1,3 N/mm² et 3,0 N/mm², plus préférablement entre 1,5 N/mm² et 2,8 N/mm², le plus préférablement entre 1,7 N/mm² et 2,5 N/mm² est générée par moyen des électrodes (12).

11. Procédé selon l'une des revendications 8 à 10, **caractérisé en ce qu'**une énergie de soudage comprise entre 1,0 J/mm² et 3,0 J/mm², de préférence entre 1,2 J/mm² et 2,6 J/mm², plus préférablement entre 1,4 J/mm² et 2,4 J/mm², le plus préférablement entre 1,6 J/mm² et 2,2 J/mm² est générée par moyen des électrodes.

12. Procédé selon l'une des revendications 8 à 11, **caractérisé en ce qu'**une pièce composite (13) composée de plusieurs couches en métal déployé (6, 7) est reliée à une autre couche en métal déployé (8).

13. Procédé selon la revendication 12, **caractérisé en ce que** l'autre couche en métal déployé (8) est reliée à la pièce composite en métal déployé (13) par moyen de soudage par points et par résistance.
